Europäisches Patentamt

European Patent Office

Office européen des brevets

(19)

(11) Veröffentlichungsnummer: **0 027 174**
**B1**

(12)

# EUROPÄISCHE PATENTSCHRIFT

(45) Veröffentlichungstag der Patentschrift:
06.04.83

(51) Int. Cl.³: **B 23 B 51/00**

(21) Anmeldenummer: 80105318.2

(22) Anmeldetag: 05.09.80

(54) **Zerspanungswerkzeug.**

(30) Priorität: 11.10.79 DE 2941179

(43) Veröffentlichungstag der Anmeldung:
22.04.81 Patentblatt 81/16

(45) Bekanntmachung des Hinweises auf die Patenterteilung:
06.04.83 Patentblatt 83/14

(84) Benannte Vertragsstaaten:
AT CH DE FR GB IT LI SE

(56) Entgegenhaltungen:
DE-A-2 644 827
FR-A-2 317 989
US-A-4 047 826

(73) Patentinhaber: MAPAL Fabrik für Präzisionswerkzeuge
Dr. Kress KG, Obere Bahnstrasse 13, D-7080 Aalen (DE)

(72) Erfinder: Kress, Dieter, Dr. Dipl.-Ing., Walkstrasse 87,
D-7080 Aalen (DE)
Erfinder: Häberle, Friedrich, Fliederstrasse 14,
D-7081 Lauchheim (DE)

(74) Vertreter: Patentanwälte Dr. Ing. Eugen Maier Dr. Ing.
Eckhard Wolf, Pischekstrasse 19, D-7000 Stuttgart 1 (DE)

Zerspanungswerkzeug

Die Erfindung betrifft ein Zerspanungswerkzeug mit einer stirnseitig in einen von zwei Backen des Messerkopfes begrenzten Schlitz auswechselbar eingesetzten, zwei axialsymmetrische Schneiden aufweisenden, mit ihren nicht im Eingriff stehenden Schneidflächen gegen zwei einen Winkel bildende Widerlagerflächen anliegenden Wendemesserplatte, die eine Bohrung zur Aufnahme eines die Backen gegeneinander pressenden Kopfschraubenbolzens aufweist. Ein solches Werkzeug ist z.B. aus der DE-A-2 644 827 bekannt.

Um mit Werkzeugen dieser Art eine hohe Genauigkeit und auch Oberflächengüte zu erzielen, müssen die beiden diametral sich gegenüberliegenden Schneiden genau auf einem Flugkreis konzentrisch zur Werkzeugachse angeordnet sein, da sonst ein exakter Rundlauf und damit ein gleichgrosser Schnittdruck der beiden Schneiden nicht gewährleistet ist. Die Messerplatte muss daher, insbesondere wenn mit einem solchen Werkzeug eine hohe Zerspanungsleistung erzielt werden soll, stabil gelagert und sicher eingespannt sein.

Der Erfindung liegt die Aufgabe zugrunde, diese stabile Lagerung und sichere Einspannung der Messerplatte mit einfachen Mitteln zu erreichen, die auch eine leichte Auswechselbarkeit der Messerplatte ermöglichen.

Diese Aufgabe wird gemäss der Erfindung mit Mitteln gelöst, die den Gegenstand des Patentanspruchs 1 bilden. Die Herstellung der der Messerplatte als Widerlager dienenden Stollen kann vereinfacht werden, wenn diese eine Gestalt gemäss dem Kennzeichen des Patentanspruchs 2 aufweisen.

Die als Widerlagerflächen dienenden Schrägflächen können eine zusätzliche, dem Hinterschneidewinkel entsprechende Schräge aufweisen. Zur Vermeidung einer punktförmigen Anlage der Widerlagerflächen sind diese vorteilhafterweise so ausgebildet, dass sie flächig gegen die nicht im Eingriff stehenden Schneiden anliegen, im Falle gekrümmter Schneiden eine der Krümmung der Schneiden entsprechende konkave Krümmung aufweisen.

In der Zeichnung ist ein Ausführungsbeispiel des erfindungsgemässen Zerspanungswerkzeugs in schematischer Weise dargestellt. Es zeigen

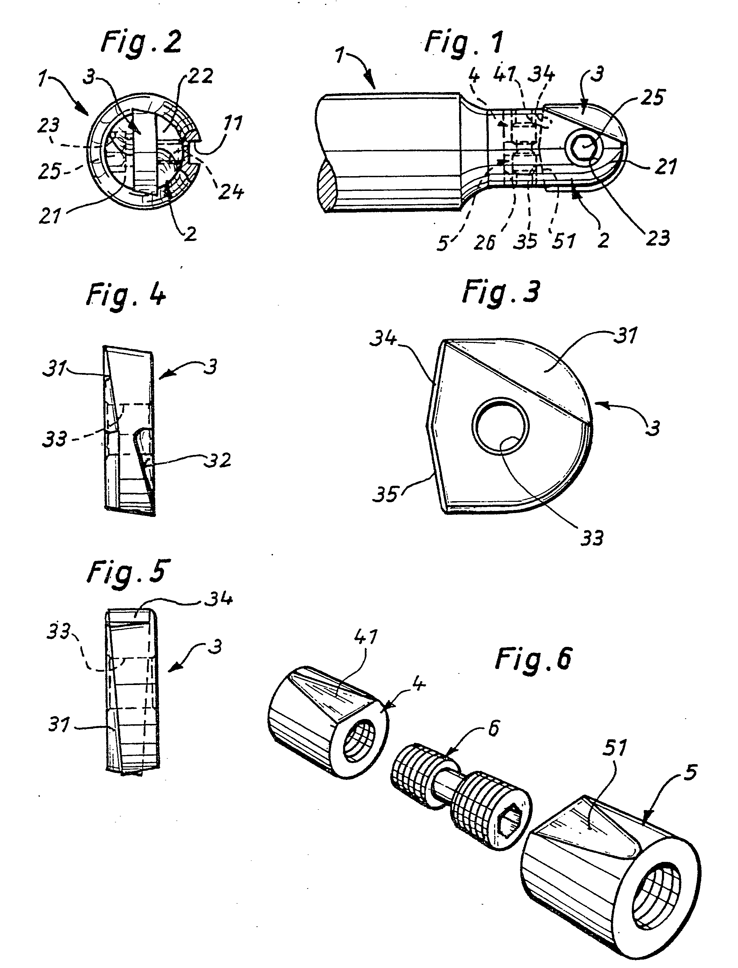

Fig. 1 eine Längsseitenansicht des Messerkopfes;

Fig. 2 eine Stirnseitenansicht des Messerkopfes;

Fig. 3 eine Breitseitenansicht der Messerplatte;

Fig. 4 eine Stirnseitenansicht der Messerplatte;

Fig. 5 eine Schmalseitenansicht der Messerplatte, senkrecht zur Längsachse des Messerkopfes gesehen;

Fig. 6 die die Gestalt von Gewindebolzen aufweisenden Stollen mit dem sie verbindenden Gewindebolzen in Explosionsdarstellung.

Das Zerspanungswerkzeug 1 weist einen Messerkopf 2 auf, der in einem radialen durchgehenden Schlitz zwischen zwei Backen 21 und 22 eine Messerplatte 3 aufnimmt. Die Messerplatte weist zwei axial-symmetrische Schrägflächen 31 und 32 auf, deren äussere Begrenzung die Schneidkanten bildet und die zusammen mit zwei Schrägflächen, die durch seitliche Aussparungen der beiden Messerkopfbacken 21 und 22 gebildet werden, je einen Spanraum begrenzen. Die Messerplatte 3 weist eine einen Kopfschraubenbolzen 25 aufnehmende Bohrung 33 und zwei rückseitige Stirnflächen 34 und 35 auf, mit denen die Messerplatte gegen die Schrägflächen 41 und 51 zweier ein Innengewinde aufweisender Stollen 4 und 5 anliegt, die in einer Bohrung 26 des Messerkopfes 2 angeordnet sind, die senkrecht zur Messerkopfachse sich am schaftseitigen Ende des Messerkopfschlitzes über dessen ganze Länge erstreckt. Von diesen beiden Stollen 4 und 5 weist der eine ein Links- und der andere ein Rechtsgewinde auf, so dass sie mittels eines zwei entsprechende Aussengewinde aufweisenden Bolzens 6 gegeneinander längsverschoben werden können. Bei einer solchen Längsverschiebung gleiten die beiden Schrägflächen 41 und 51 an den rückseitigen Stirnflächen 34 und 35 der Messerplatte 3 entlang und fixieren diese im Zusammenwirken mit der die beiden Messerkopfbacken 21 und 22 durchsetzenden Klemmschraube 25 in ihrer axialsymmetrischen Wirkstellung. Der Schraubenkopf dieser Klemmschraube wird von der zylindrischen Bohrung 23 der Backe 21 aufgenommen, mit dem am anderen Ende der Schraube vorgesehenen Gewinde greift sie in die Gewindebohrung 24 des Backens 22 ein. Am rückwärtigen Ende weist der Schaft 1 eine Längsnut 11 auf, in die eine Leiste einer Antriebshülse oder eines Futters eingreift.

**Patentansprüche**

1. Zerspanungswerkzeug mit einer stirnseitig in einen von zwei Backen (21, 22) des Messerkopfes (2) begrenzten Schlitz auswechselbar eingesetzten, zwei axialsymmetrische Schneiden aufweisenden, mit ihren nicht im Eingriff stehenden Schneidflächen gegen zwei einen Winkel bildende Widerlagerflächen (41, 51) anliegenden Wendemesserplatte (3), die eine Bohrung (33) zur Aufnahme eines die Backen gegeneinander pressenden Kopfschraubenbolzens (25) aufweist, dadurch gekennzeichnet, dass die Widerlagerflächen (41, 51) durch zwei ein Innengewinde aufweisende, in einer schaftseitigen Verbreiterung des Schlitzes gleitende Stollen (4, 5) gebildet werden, die mittels eines ein Links- und ein Rechts-Gewinde aufweisenden Bolzens (6) gegeneinander und damit gleichzeitig gegen den die Messerplatte (3) durchsetzenden Kopfschraubenbolzen (25) verspannbar sind.

2. Zerspanungswerkzeug nach Anspruch 1, dadurch gekennzeichnet, dass der Messerkopf (2) am schaftseitigen Ende des Schlitzes eine über dessen ganze radiale Länge sich erstreckende Bohrung (26) aufweist und die Stollen (4, 5) durch ein Innengewinde aufweisende, in der Bohrung (26) verschiebbare Einheiten mit spiegelbildlich

ausgebildeten Schrägflächen (41, 51) gebildet werden.

3. Zerspanungswerkzeug nach Anspruch 1 oder 2, dadurch gekennzeichnet, dass die beiden rückseitigen Stirnflächen (34, 35) der Messerplatte (3) einen Winkel ≧ 140°, vorzugsweise von etwa 160° einschliessen.

4. Zerspanungswerkzeug nach einem der Ansprüche 1 bis 3, dadurch gekennzeichnet, dass die als Widerlager dienenden Schrägflächen (41, 51) eine zusätzliche, dem Hinterschneidewinkel der Messerplatte (3) entsprechende Schräge aufweisen.

5. Zerspanungswerkzeug mit einer gekrümmte Schneiden aufweisenden Messerplatte nach Anspruch 1, dadurch gekennzeichnet, dass die Schrägflächen (41, 51) in radialer Richtung konkav gekrümmt sind.

**Revendications**

1. Outil d'enlèvement de copeaux, comportant une plaque de coupe réversible, engagée par son côté frontal dans une fente délimitée par deux mâchoires (21, 22) de la tête de coupe (2), comportant deux arêtes de coupe axialement symétriques et s'appliquant par ses surfaces de coupe non actives contre deux surfaces d'appui (41, 51) formant un angle entre elles, ladite plaque (3) étant pourvue d'un trou (33) servant à recevoir un boulon (25) poussant les mâchoires l'une vers l'autre, outil caractérisé en ce que les surfaces d'appui (41, 51) sont constituées par deux blocs (4, 5) comportant un filetage intérieur, coulissant dans un élargissement en forme de colonne de la fente et qui peuvent être bloqués l'un contre l'autre, et par conséquent simultanément contre le boulon (25) traversant la plaque de coupe (3) à l'aide d'une broche (6) comportant un filetage à pas à gauche et un filetage à pas à droite.

2. Outil d'enlèvement de copeaux selon la revendication 1, caractérisé en ce que la tête de coupe (2) comporte à l'extrémité de la fente située du côté de la colonne, un trou (26) s'étendant sur toute sa longueur radiale et les blocs (4, 5) sont constitués par des élément unitaires comportant un filetage intérieur, déplaçables dans ledit trou (26) et pourvus de surfaces inclinées (41, 51) agencées symétriquement.

3. Outil d'enlèvement de copeaux selon l'une des revendications 1 ou 2, caractérisé en ce que les deux surfaces frontales (34, 35), placées sur le côté arrière, de la plaque de coupe (3) font entre elles un angle supérieure ou égal à 140°, de préférence d'environ 160°.

4. Outil d'enlèvement de copeaux selon l'une des revendications 1 à 3, caractérisé en ce que les surfaces inclinées (41, 51) servant de contre-appui comportent un chanfrein supplémentaire correspondant à l'angle de dépouille de la plaque de coupe (3).

5. Outil d'enlèvement de copeaux selon la revendication 1 comportant une plaque de coupe pourvue d'une arête de coupe incurvée, caractérisé en ce que les surfaces inclinées (41, 51) sont incurvées avec un profil concave dans une direction radiale.

**Claims**

1. A chip-removing tool with a turn-over cutter plate which is interchangeably fitted by its faces in a slot bounded by two jaws (21, 22) of the cutter head (2), has two axially symmetric cutting edges and bears by its cutting faces, that are not in engagement, against two backing faces (41, 51) forming an angle, which turn-over cutter plate contains a drilled hole (33) for receiving a head screw-bolt (25) which presses the jaws towards each other, characterized in that the backing faces (41, 51) are formed by two supports (4, 5) which have an internal screw-thread and slide in a shank-side widened portion of the slot, which supports can be braced against each other by means of a bolt (6), having a left-hand and a right-hand screw-thread, and can therefore at the same time be braced against the head screw bolt (25) which passes through the cutter plate (3).

2. A chip-removing tool according to claim 1, characterized in that the cutter head (2) has a drilled hole (26), which is located at the shank-side end of the slot and extends over the entire radial length thereof, and the supports (4, 5) are formed by internally screw-threaded units displaceable in the drilled hole (26) and having inclined faces (41, 51) of mirror-image formation.

3. A chip-removing tool according to claim 1 or claim 2, characterized in that the two rear end faces (34, 35) of the cutter plate (3) enclose an angle of ≧ 140°, and preferably of approximately 160°.

4. A chip-removing tool according to any one of claims 1 to 3, characterized in that the inclined faces (41, 51), forming bracing means, have an additional inclination corresponding to the undercut angle of the cutting plate (3).

5. A chip-removing tool with a cutter plate having curved cuttings edges according to claim 1, characterized in that the inclined faces (41, 51) are of concave curvature in the radial direction.

0 027 174

1/1

## Fig. 2

## Fig. 1

## Fig. 4

## Fig. 3

## Fig. 5

## Fig. 6